# EUROPÄISCHE PATENTSCHRIFT

(11) **EP 2 463 098 B1**
(45) Veröffentlichungstag und Bekanntmachung des Hinweises auf die Patenterteilung: **21.08.2013**
(21) Anmeldenummer: 11009648.4
(22) Anmeldetag: 07.12.2011
(51) Int. Cl.: B32B 37/10, G06K 19/077, B32B 37/18

(54) **Verfahren, Anordnung sowie Verwendung einer herkömmlichen Laminierpresse zur Herstellung eines kartenförmigen Datenträgers**
Method, arrangement as well as use of a conventional laminating press for producing a card shaped data carrier
Méthode, dispositif ainsi que utilisation d'une presse à laminer conventionelle pour la fabrication d'un support de données en forme de carte

(30) Priorität: 10.12.2010 DE 102010054055
(43) Veröffentlichungstag der Anmeldung: 13.06.2012
(73) Patentinhaber: Giesecke & Devrient GmbH, 81677 München (DE)
(72) Erfinder: Kohl, Klaus, 83714 Miesbach (DE)

(56) Entgegenhaltungen:
- DE-A1- 4 441 552
- GB-A- 2 279 610
- US-A1- 2005 039 856

## Beschreibung

Die vorliegende Erfindung betrifft die Herstellung eines kartenförmigen Datenträgers aus einem Stapel aus zumindest zwei Kartenschichten.

Derartige kartenförmige Datenträger, wie zum Beispiel Ausweiskarten, Kredit- und Geldkarten oder dergleichen, werden in der Regel durch Laminieren von mehreren Kartenschichten, insbesondere von Kunststoffschichten, mit unterschiedlichen sicherheitstechnischen oder sonstigen Eigenschaften hergestellt, z.B. aus einer Trägerschicht und mehreren Folienschichten, wie z.B. schützende Deck- und informationsvermittelnde oder optisch wirksame Zwischenschichten.

Die hierzu üblicherweise verwendeten Laminierpressen erzeugen den erforderlichen Druck und die notwendige Laminiertemperatur, um den Stapel aus Kartenschichten oberhalb der Erweichungstemperatur der Kunststoffe und/ oder von dazwischen liegenden Klebeschichten unwiderruflich miteinander zu verschmelzen und so den Datenträger zu bilden.

Hierbei können jedoch Luftblasen oder Lufteinschlüsse, die beim Laminieren zwischen den Kartenschichten verbleiben, die die Stabilität und Dauerhaftigkeit der Laminierung beeinträchtigen. Die laminierten Kartenschichten können sich dann entweder nach einiger Zeit selbstständig voneinander trennen oder sind zumindest leichter manuell voneinander trennbar.

Aus diesem Grund werden inzwischen spezielle Laminierpressen mit Vakuumkammern eingesetzt, um die Laminierung unter Vermeidung von Lufteinschlüssen im Vakuum durchzuführen. So zeigt zum Beispiel die DE 44 41 552 A1 eine Laminiervorrichtung, bei der die zu laminierenden Kunststoffschichten in einen evakuierbaren Raum einer Laminierpresse eingebracht werden, der durch einen zweiteiligen Rahmen mit einem Boden und einer Abdeckung aus Stahlblech gebildet ist. Auch die GB 2 279 610 A zeigt eine Laminierpresse mit evakuierbaren Kassetten, in die Kunststoffschichten zur Laminierung eingebracht werden können. Derartige integrierte Vakuumlaminierpressen sind jedoch technisch komplex und entsprechend teuer.

Demzufolge ist es die Aufgabe der vorliegenden Erfindung, eine einfachere Möglichkeit bereitzustellen, einen Stapel aus Kartenschichten ohne Beeinträchtigung durch Lufteinschlüsse zuverlässig zu einem kartenförmigen Datenträger zu laminieren.

Diese Aufgabe wird durch ein Verfahren, eine Anordnung sowie eine Verwendung einer herkömmlichen Laminierpresse gemäß den Merkmalen der unabhängigen Ansprüche gelöst. In davon abhängigen Ansprüchen sind vorteilhafte Ausgestaltungen und Weiterbildungen der Erfindung angegeben.

Bei dem erfindungsgemäßen Verfahren wird ein kartenförmiger Datenträger aus einem Stapel aus zumindest zwei Kartenschichten durch Laminieren mit einer herkömmlichen Laminierpresse hergestellt, wobei der Stapel aus Kartenschichten bei der Laminierung in einer vorher vakuumierten Vakuumhülle vorliegt. Die Kartenschichten werden also vor dem eigentlichen Laminiervorgang in eine einstückige Vakuumhülle eingebracht, welche anschließend derart vakuumiert wird, dass zwischen den einzelnen Kartenschichten im Wesentlichen keine Lufteinschlüsse oder Luftpolster mehr verbleiben. Dieses separat angefertigte Laminierpaket, welches die zu laminierenden Kartenschichten und die diese umschließende, vakuumierte und luftdicht verschlossene Vakuumhülle umfasst, wird dann geeignet in eine herkömmliche Laminierpresse eingelegt und dort laminiert, so dass aus den Kartenschichten mittels einer herkömmlichen Laminierpresse ein kartenförmiger Datenträger ohne Lufteinschlüsse hergestellt werden kann.

Unter einer herkömmlichen Laminierpresse ist hierbei eine Presse zu verstehen, die keine integrierte Vakuumkammer umfasst, die also die Kartenschichten nicht in einem selbst erzeugten Vakuum laminiert, sondern bei Umgebungsluftdruck. Unter einer Vakuumierung ist in diesem Zusammenhang der Vorgang zu verstehen, bei dem aus dem Inneren der Vakuumhülle derart viel Luft entfernt bzw. abgesaugt wird, dass in der Vakuumhülle ein ausreichender Unterdruck gegenüber dem Umgebungsluftdruck entsteht, um etwaige Luftpolster oder Lufteinschlüsse zwischen den in der Vakuumhülle eingebrachten Kartenschichten zu entfernen.

Der besondere technische Vorteil der Erfindung liegt demnach darin, dass einerseits herkömmliche, technisch einfache und kostengünstige Laminierpressen verwendet und andererseits die technischen Vorteile einer Laminierung unter Vakuum ausgenutzt werden können. Dadurch kann trotz Verwendung einer herkömmlichen Laminierpresse der Ausschuss von fehlerhaft laminierten kartenförmigen Datenträgern reduziert werden. Ferner wird aufgrund des Laminierens des von der vakuumierten Vakuumhülle umschlossenen Stapels aus Kartenschichten auch eine gegenüber dem herkömmlichen Laminieren bei Umgebungsluftdruck geringere Laminiertemperatur und geringere Laminierzeit benötigt.

Die zumindest zwei Kartenschichten des in die Vakuumhülle eingebrachten Stapels können beispielsweise einen großflächigen Nutzen bilden, aus dem nach Vakuumierung und Laminierung mehrere Datenträger ausgestanzt werden können. Ebenso können in die Vakuumhülle mehrere übereinander liegende Stapel aus Kartenschichten eingebracht werden, die jeweils durch ein Laminierblech getrennt sind, so dass nach Vakuumieren und Laminieren aus jedem der getrennten, laminierten Stapel aus Kartenschichten zumindest ein kartenförmiger Datenträger gebildet werden kann. Die die einzelnen Stapel trennenden Laminierbleche sind vorzugsweise geeignete Stahlbleche, die den von der Laminierpresse aufgebrachten Laminierdruck möglichst verlustfrei weitergeben und der Laminiertemperatur standhalten.

Die Vakuumhülle ist vorzugsweise aus einem flexibel verformbaren Kunststoffmaterial gebildet, welches beim Vakuumieren komprimiert wird und sich zusammenzieht, so dass die vakuumierte Vakuumhülle möglichst eng an den eingebrachten Kunststoffschichten anliegt und diese im wesentlichen ohne Lufteinschlüsse umschließt. Als Material der Vakuumhülle wird insbesondere ein Kunststoffmaterial ausgewählt, welches dem Laminiervorgang ohne Beeinträchtigungen und ohne Beschädigungen standhält, so dass das Vakuum während des gesamten Laminierprozesses erhalten bleibt. Insbesondere liegt die Erweichungstemperatur der Vakuumhülle oberhalb der Erweichungstemperatur der Kartenschichten. Die Vakuumhülle wird nach dem Laminiervorgang von dem laminierten Stapel entfernt.

Vorzugsweise ist die Vakuumhülle als Folienschlauch ausgestaltet, der an einem, möglicherweise aber auch an zwei Enden offen ist, damit die Kunststoffschichten in den Folienschlauch eingebracht werden können. Nach der Vakuumierung und wird der Folienschlauch an dem einen bzw. den beiden offenen Enden luftdicht verschlossen und das dadurch gebildete Laminierpaket wird in die Laminierpresse eingelegt. Die Laminierhülle kann insbesondere aus einem endlosen Folienschlauch bestehen, der nach Einbringen des Stapels aus Kartenschichten und Vakuumieren jeweils vor und hinter dem Stapel verschlossen und von dem Restschlauch zur Bildung eines Laminierpakets abgetrennt wird.

Die Kartenschichten des in die Vakuumhülle eingebrachten Stapels bestehen vorzugsweise aus laminierfähigem Kunststoff oder enthalten zumindest hohe Kunststoffanteile. Zwischen den Kartenschichten können Kleberschichten aufgetragen sein, so dass beim Laminieren die Oberflächen der Kartenschichten und/ oder der Klebeschichten erweichen und sich mit benachbarten Schichten verbinden. Neben Kunststoffmaterialien können die Kartenschichten aber auch andere Materialien umfassen, oder vollständig aus ihnen bestehen, z.B. aus Metall, anderen leitfähigen Materialien oder dergleichen.

Vorzugsweise werden auf die oben beschriebene Art und Weise kartenförmige Datenträger hergestellt, die zumindest drei Kartenschichten umfassen, nämlich eine obere und untere, möglicherweise transparente Deck- bzw. Schutzschicht sowie zumindest eine Zwischenschicht, die einen integrierten Schaltkreis umfasst und/oder mit Informationen bedruckt ist und/oder optisch variable oder anderweitige informationsvermittelnde, optisch wirksame Strukturen umfasst. Hierbei sind die Erweichungstemperaturen der jeweiligen Kunststoffschichten und der Vakuumhülle einerseits und die Laminiertemperatur der Laminierpresse andererseits derart aufeinander abgestimmt, dass die einzelnen Kunststoffschichten oberhalb von deren Erweichungstemperatur laminiert werden, ohne dabei jedoch die gegebenenfalls in einer Zwischenschicht vorhandenen elektronischen oder optisch wirksamen Elemente zu beschädigen.

Der eigentliche Laminiervorgang wird dadurch ausgeführt, dass das Laminierpaket auf einem mit Presspolster und Laminierblech ausgestatteten Transportblech der Laminierpresse angeordnet und mit einem ebenfalls mit Presspolster und Laminierblech ausgestatteten Deckblech abgedeckt wird. Anschließend wird das Laminierpaket auf die vorgegebenen Laminiertemperatur erhitzt, in erhitztem Zustand verpresst und wieder abgekühlt.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Figur 1: ein Schema eines schrittweisen Ablaufs des erfindungsgemäßen Verfahrens;
- Figur 2: ein Laminierpaket, welches zum Laminieren in einer Laminierpresse angeordnet ist; und
- Figur 3: eine Laminieranordnung bestehend aus einer Laminierpresse und einer Vakuumeinrichtung.

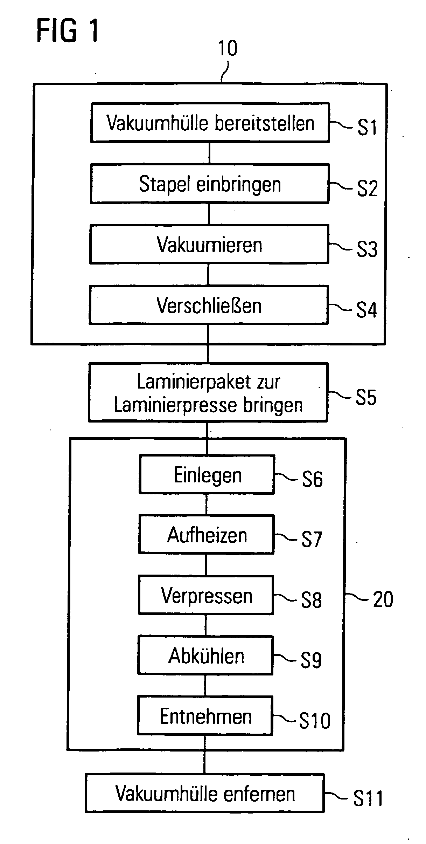

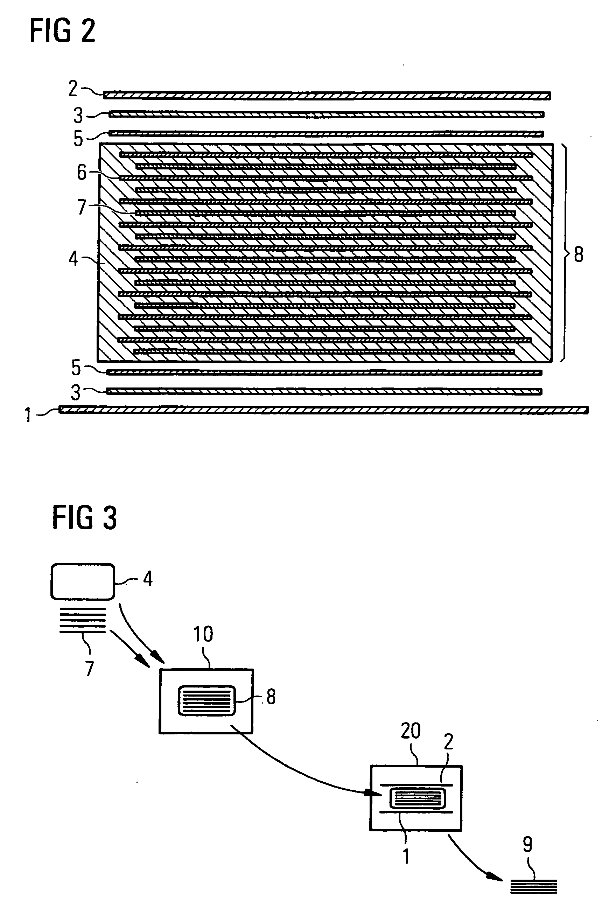

Durch das Verfahren gemäß Figur 1 werden kartenförmige Datenträger 9 hergestellt, die aus einem Stapel 7 verschiedener Kunststoffschichten bestehen (vgl. Fig. 2, 3), welche geeignet verpresst bzw. laminiert sind. Derartige kartenförmige Datenträger 9 sind beispielsweise Chipkarten, Ausweiskarten, Prozessorkarten ("Smart Card") oder dergleichen. Zur erfindungsgemäßen Herstellung der kartenförmigen Datenträger 9 werden gemäß einer bevorzugten Ausführungsform zwei separate Vorrichtungen verwendet, nämlich eine Vakuumeinrichtung 10 und eine herkömmliche Laminierpresse 20 (vgl. Fig. 3).

Während mit der Vakuumeinrichtung 10 ein vakuumiertes Laminierpaket 8 hergestellt wird, bei dem ein Stapel 7 aus mehreren Kunststoffschichten in einer Vakuumhülle 4 vakuumiert und luftdicht abgeschlossen verpackt ist, dient die Laminierpresse 20 lediglich dazu, die in dem Laminierpaket 8 befindlichen Kunststoffschichten mittels Aufbringens von Wärme und Druck zu einem kartenförmiger Datenträger 9 zu verpressen, bei dem die einzelnen Kunststoffschichten fest und irreversibel mit einander verbunden sind.

Hierbei repräsentiert die Vakuumierung durch die Vakuumeinrichtung 10 einen vorbereitenden Prozessschritt, bei dem insbesondere Lufteinschlüsse und Luftpolster zwischen den Kunststoffschichten entfernt werden, so dass anschließend eine möglichst stabile und dauerhafte Laminierung durch die Laminierpresse 20 erfolgen kann, da zwischen den zu laminierenden Kunststoffschichten keine Lufteinschlüsse mehr vorhanden sind.

Insofern ist es gemäß der vorliegenden Erfindung bevorzugt, eine herkömmliche und kostengünstige Laminierpresse 20 zu verwenden, die selbst keinerlei eigene Vakuumeinheit umfasst, und gleichzeitig die Vorteile der Vakuumierung durch Einsatz einer separaten Vakuumeinrichtung 10 zu nutzen.

Die in Figur 1 illustrierten Verfahrensschritte umfassen Schritte S1 bis S4, die von oder im Rahmen des Betriebs der Vakuumeinrichtung 10 ausgeführt werden, und Schritte S6 bis S10, die von oder im Rahmen des Betriebs der Laminierpresse 20 ausgeführt werden.

Zunächst wird gemäß Schritt S1 eine Vakuumhülle bereitgestellt, die aus einem Material besteht, welches durch die in der Laminierpresse 20 verwendete Laminiertemperatur (vgl. Schritt S7) nicht beeinträchtigt oder beschädigt wird. Das Material der Vakuumhülle hat deshalb eine Erweichungstemperatur, die oberhalb der Laminiertemperatur der Laminierpresse 20 liegt. Vorzugsweise besteht die Vakuumhülle aus einem Folienschlauch, zum Beispiel aus einem endlosen Folienschlauch, in den in Schritt S2 einer oder mehrere Stapel 7 aus Kunststoffschichten 7a eingebracht wird/werden. Diese Situation ist beispielsweise in Figur 2 gezeigt, die einen Folienschlauch 4 zeigt, in dem mehrere Stapel 7 von Kunststoffschichten 7a jeweils getrennt durch Laminierbleche 6 eingebracht sind.

Ein Stapel 7 kann beispielsweise aus einem größeren Nutzen von mehreren Kunststoffschichten bestehen, aus dem, nach erfolgreicher Laminierung, mehrere kartenförmige Datenträger 9 ausgestanzt werden können. Solche großflächige Nutzen aus Kunststoffschichten können, wie in Figur 2 angedeutet, auch übereinander gestapelt und durch Laminierbleche 6 getrennt werden, so dass aus einem Laminierpaket 8 eine große Anzahl von kartenförmigen Datenträgern 8 ausgestanzt werden kann.

In der Regel wird ein Stapel 7 aus Kunststoffschichten neben geeigneten Deck- und Schutzschichten auch zumindest eine Zwischenschicht aufweisen, in die ein integrierter Schaltkreis, eine optisch variable oder eine sonstige informationsvermittelnde Struktur integriert ist. Ebenso können in eine oder mehrere der Schichten Antennen, Kontaktfelder oder dergleichen integriert sein, die das Erhitzen und Verpressen im Rahmen der Laminierung unbeschadet überstehen.

In Schritt S3 wird der Folienschlauch 4 mit den darin befindlichen Kunststoffschichten vakuumiert. Dabei wird die in dem Folienschlauch 4 befindliche Luft und insbesondere Lufteinschlüsse zwischen den einzelnen Kunststoffschichten weitgehend entfernt, so dass in dem Folienschlauch 4 ein Unterdruck gegenüber dem Umgebungsluftdruck entsteht, der dazu führt, dass der Folienschlauch 4 den einen oder die mehreren Stapel 7 aus Kunststoffschichten eng anliegend umschließt und so ein Laminierpaket 8 bildet. Schließlich wird der vakuumierte Folienschlauch 4 in Schritt S4 luftdicht verschweißt.

Das auf diese Weise erhaltene Laminierpaket 8, bestehend aus dem vakuumierten Folienschlauch 4 mit darin eingebrachten Stapeln 7 aus Kunststoffschichten, wird in Schritt S5 zu der Laminierpresse 20 transportiert.

In Schritt S6 wird das Laminierpaket 8 wie in Figur 2 gezeigt in die Laminierpresse 10 eingelegt und dort auf ein Transportblech 1 aufgelegt. Zwischen dem Transportblech 1 und dem Laminierpaket 8 ist hierbei ein Presspolster 3 und ein Laminierblech 5 angeordnet. Abgedeckt wird das Laminierpaket 8 mit einem Deckblech 2, welches ebenfalls mit einem Presspolster 3 und einem weiteren Laminierblech 5 ausgestattet ist. Diese Anordnung wird schließlich in Schritt S7 auf die vorgegebene Laminiertemperatur aufgeheizt, in Schritt S8 durch Aufbringen eines geeigneten Laminierdrucks irreversibel und ohne Beeinträchtigung durch eingeschlossene Luftpolster verpresst und in Schritt S9 wieder abgekühlt. Da sich beim Verpressen in Schritt S8 zwischen den einzelnen Kunststoffschichten des Stapels 7 keinerlei Lufteinschlüsse mehr befinden, wird ein optimales Laminierergebnis bzw. eine maximale Haftung zwischen den verpressten Kunststoffschichten erreicht. In Schritt S10 wird schließlich das vollständig laminierte Laminierpaket 8 entnommen.

Schließlich wird in Schritt S11 von dem laminierten Laminierpaket 8 die Vakuumhülle 4 entfernt und aus den laminierten Stapeln 7 bzw. Nutzen werden Datenträger 9 ausgestanzt.

## Patentansprüche

1. Verfahren zum Herstellen zumindest eines kartenförmigen Datenträgers (9) durch Laminieren (S7-S9) zumindest eines Stapels (7) aus zumindest zwei Kartenschichten in einer Laminierpresse (20), **dadurch gekennzeichnet, dass** der zumindest eine Stapel (7) aus Kartenschichten vor dem Laminieren (S7-S9) in eine einstückige Vakuumhülle (4) eingebracht (S2) und die Vakuumhülle (4) anschließend vakuumiert wird (S3).

2. Verfahren nach Anspruch 1, **dadurch gekennzeichnet, dass** die Vakuumhülle (4) mit dem darin eingebrachten zumindest einen Stapel (7) aus Kartenschichten außerhalb und unabhängig von der Laminierpresse (20) vakuumiert wird (S3).

3. Verfahren nach Anspruch 1 oder 2, **dadurch gekennzeichnet, dass** die Vakuumhülle (4) derart vakuumiert wird (S3), dass sich zwischen den Kartenschichten keine Lufteinschlüsse mehr befinden.

4. Verfahren nach einem der Ansprüche 1 bis 3, **dadurch gekennzeichnet, dass** eine Vakuumhülle (4) verwendet wird (S1), die aus einem flexibel verformbaren Kunststoffmaterial besteht, welches sich beim Vakuumieren (S3) derart zusammenzieht, dass die Vakuumhülle (4) den darin eingebrachten Stapel (7) aus Kartenschichten ohne Lufteinschluss umschließt.

5. Verfahren nach einem der Ansprüche 1 bis 4, **dadurch gekennzeichnet, dass** in die Vakuumhülle (4) zumindest ein Stapel (7) aus Kartenschichten in Form eines Nutzens eingebracht wird (S2), dass der Nutzen nach Vakuumieren (S3) der Vakuumhülle (4) laminiert wird (S7-S9), und dass aus dem laminierten Nutzen mehrere Datenträger (9) ausgestanzt werden.

6. Verfahren nach einem der Ansprüche 1 bis 5, **dadurch gekennzeichnet, dass** in die Vakuumhülle (4) mehrere übereinanderliegende, durch Laminierbleche (6) getrennte Stapel (7) aus jeweils zumindest zwei Kartenschichten eingebracht werden (S2), und dass die mehreren Stapel (7) aus Kartenschichten nach Vakuumieren (S3) der Vakuumhülle (4) derart laminiert werden (S7-S9), dass mehrere Datenträger (9) gebildet werden.

7. Verfahren nach einem der Ansprüche 1 bis 6, **dadurch gekennzeichnet, dass** als Vakuumhülle (4) ein zumindest an einem Ende offener Folienschlauch verwendet wird (S1), der nach Einbringen (S2) des zumindest einen Stapels (7) aus Kartenschichten vakuumiert (S3) und an dem zumindest einen offenen Ende luftdicht verschlossen wird (S4).

8. Verfahren nach einem der Ansprüche 1 bis 7, **dadurch gekennzeichnet, dass** in die Vakuumhülle (4) zumindest ein Stapel (7) aus Kartenschichten eingebracht wird (S2), der eine obere und untere Deckschicht sowie zumindest eine Zwischenschicht mit einem integrierten Schaltkreis und/ oder mit darauf aufgebrachten oder darin eingebrachten optisch oder anderweitig physikalisch vermittelten Informationen umfasst.

9. Verfahren nach Anspruch einem der Ansprüche 1 bis 8, **dadurch gekennzeichnet, dass** eine Vakuumhülle (4) aus einem Kunststoffmaterial verwendet wird (S1), dessen Erweichungstemperatur oberhalb einer Erweichungstemperatur der Kartenschichten liegt.

10. Verfahren nach Anspruch 8, **dadurch gekennzeichnet, dass** die Laminierpresse (20) mit einer Laminiertemperatur auf die von der vakuumierten Vakuumhülle (4) umschlossenen Kartenschichten einwirkt (S7, S8), die unterhalb der Erweichungstemperatur der Vakuumhülle (4) und oberhalb der Erweichungstemperatur der Kartenschichten liegt.

11. Verfahren nach einem der Ansprüche 1 bis 10, **dadurch gekennzeichnet, dass** die vakuumierte Vakuumhülle (4) in der Laminierpresse (20) zwischen Presspolstern (3) und Laminierblechen (5) angeordnet wird und der zumindest eine Stapel (7) aus Kartenschichten bis zu einer vorgegebenen Laminiertemperatur aufgeheizt (S7), verpresst (S8) und abgekühlt (S9) wird.

12. Verfahren nach einem der Ansprüche 1 bis 11, **dadurch gekennzeichnet, dass** der zumindest eine Stapel (7) aus Kartenschichten mit einer bei Umgebungsluftdruck laminierenden Laminierpresse (20) laminiert wird (S7-S9).

13. Anordnung zur Herstellung zumindest eines kartenförmigen Datenträgers (9), umfassend eine Laminierpresse (20) und eine in der Laminierpresse angeordnete (20), nach einem der Ansprüche 1 bis 9 bereitgestellte, vakuumierte und zumindest einen zu laminierenden Stapel (7) aus zumindest zwei Kartenschichten umschließende Vakuumhülle (4), wobei die Laminierpresse (20) eingerichtet ist, den zumindest einen Stapel (7) aus Kartenschichten nach einem der Ansprüche 1 bis 12 zu laminieren.

14. Anordnung nach Anspruch 13, umfassend eine von der Laminierpresse (20) separate Vakuumeinrichtung (10), die eingerichtet ist, den in die Vakuumhülle (4) eingebrachten zumindest einen Stapel (7) aus Kartenschichten nach einem der Ansprüche 1 bis 9 zu vakuumieren.

15. Verwendung einer bei Umgebungsluftdruck laminierenden Laminierpresse (20) zum Laminieren zumindest eines Stapels (7) aus zumindest zwei Kartenschichten gemäß einem Verfahren nach einem der Ansprüche 1 bis 12, derart, dass zwischen den Kartenschichten keine Lufteinschlüsse vorhanden sind.

## Claims

1. A method for manufacturing at least one card-shaped data carrier (9) by laminating (S7-S9) at least one stack (7) of at least two card layers in a laminating press (20), **characterized in that** the at least one stack (7) of card layers is inserted (S2) in a single-piece vacuum sheath (4) before laminating (S7-S9) and the vacuum sheath (4) is subsequently vacuumed.

2. The method according to claim 1, **characterized in that** the vacuum sheath (4) with the at least one stack (7) inserted therein is vacuumed (S3) outside of and independently of the laminating press (20).

3. The method according to claim 1 or 2, **characterized in that** the vacuum sheath (4) is vacuumed (S3) in such a fashion that there are no more inclusions of air between the card layers.

4. The method according to any of the claims 1 to 3, **characterized in that** a vacuum sheath (4) is employed (S1) that consists of a flexibly deformable plastic material that contracts upon vacuuming (S3) such that the vacuum sheath (4) encloses the stack (7) of card layers inserted therein without any inclusion of air.

5. The method according to any of the claims 1 to 4, **characterized in that** in the vacuum sheath (4) at least one stack (7) of card layers is inserted (S2) in the form of a multi-up assembly, that the multi-up assembly is laminated (S7-S9) after the vacuuming (S3) of the vacuum sheath (4), and that several data carriers (9) are punched out from the laminated multi-up assembly.

6. The method according to any of the claims 1 to 5, **characterized in that** in the vacuum sheath (4) several stacks (7) of respectively at least two card layers are inserted (S2), said stacks being separated by laminating plates (6), and **in that** the several stacks (7) of card layers are laminated (S7-S9) after the vacuuming (S3) of the vacuum sheath (4) in such a fashion that several data carriers (9) are formed.

7. The method according to any of the claims 1 to 6, **characterized in that** as vacuum sheath (4) a foil tube is employed (S1) that is open at least at one end, said foil tube being vacuumed (S3) after the insertion (S2) of the at least one stack (7) of card layers and being closed (S4) airtight at the at least one open end.

8. The method according to any of the claims 1 to 7, **characterized in that** in the vacuum sheath (4) there is inserted (S2) at least one stack (7) of card layers comprising an upper and a lower cover layer and at least one intermediate layer with an integrated circuit and/or with optically or otherwise physically conveyed information items applied thereon or inserted therein.

9. The method according to any of the claims 1 to 8, **characterized in that** a vacuum sheath (4) of a plastic material is employed (S1), whose softening temperature lies above a softening temperature of the card layers.

10. The method according to claim 8, **characterized in that** the laminating press (20) acts (S7, S8) on the card layers enclosed by the vacuumed vacuum sheath (4) with a laminating temperature that lies below the softening temperature of the vacuum sheath (4) and above the softening temperature of the card layers.

11. The method according to any of the claims 1 to 10, **characterized in that** the vacuumed vacuum sheath (4) is arranged in the laminating press (20) between press pads (3) and laminating plates (5) and the at least one stack (7) of card layers is heated (S7) up to a predetermined laminating temperature, pressed (S8) and cooled (S9).

12. The method according to any of the claims 1 to 11, **characterized in that** the at least one stack (7) of card layers is laminated (S7-S9) using a laminating press (20) that laminates at ambient air pressure.

13. An arrangement for manufacturing at least one card-shaped data carrier (9), comprising a laminating press (20) and a and a vacuum sheath (4) arranged (20) in the laminating press, said sheath being made available, vacuumed and enclosing at least one stack (7), to be laminated, of at least two card layers according to any of the claims 1 to 9, wherein the laminating press (20) is adapted to laminate the at least one stack (7) of card layers according to any of the claims 1 to 12.

14. The arrangement according to claim 13, comprising a vacuum device (10) separate from the laminating press (20) that is adapted to vacuum, in accordance with any of the claims 1 to 9, the at least one stack (7) of card layers inserted in the vacuum sheath (4).

15. The employment of a laminating press (20) that laminates at ambient air pressure for laminating at least one stack (7) of at least two card layers according to a method in accordance with any of the claims 1 to 12, in such a fashion that there are no inclusions of air between the card layers.

## Revendications

1. Procédé de fabrication d'au moins un support de données (9) en forme de carte par laminage (S7-S9) d'au moins une pile (7) d'au moins deux couches de carte dans une presse de laminage (20), **caractérisé en ce que** la au moins une pile (7) de couches de carte est insérée (S2), avant le laminage (S7-S9), dans une enveloppe à vide (4) d'un seul tenant et **en ce que** l'enveloppe à vide (4) est ensuite mise sous vide (S3).

2. Procédé selon la revendication 1, **caractérisé en ce que** l'enveloppe à vide (4) est, avec la au moins une pile (7) de couches de carte y étant insérée, mise sous vide (S3) à l'extérieur et indépendamment de la presse de laminage (20).

3. Procédé selon la revendication 1 ou 2, **caractérisé en ce que** l'enveloppe à vide (4) est mise de telle sorte sous vide (S3) qu'il n'y a plus d'air occlus entre les couches de carte.

4. Procédé selon une des revendications de 1 à 3, **caractérisé en ce qu'**une enveloppe à vide (4) est utilisée (S1), qui consiste en un matériau en matière plastique flexiblement déformable qui se rétracte de telle sorte lors de la mise sous vide (S3) que l'enveloppe à vide (4) enserre sans air occlus la pile (7) de couches de carte y étant insérée.

5. Procédé selon une des revendications de 1 à 4, **caractérisé en ce que**, dans l'enveloppe à vide (4), au moins une pile (7) de couches de carte est insérée (S2) sous forme d'un paquet, **en ce que** le paquet est laminé (S7-S9) après mise sous vide (S3) de l'enveloppe à vide (4), et **en ce que** plusieurs supports de données (9) sont découpés à partir du paquet laminé.

6. Procédé selon une des revendications de 1 à 5, **caractérisé en ce que**, dans l'enveloppe à vide (4), plusieurs piles (7) superposées, composées respectivement d'au moins deux couches de carte et séparées par des tôles de laminage (6) sont insérées (S2), et **en ce que** les plusieurs piles (7) de couches de carte sont laminées (S7-S9) de telle manière après la mise sous vide (S3) de l'enveloppe à vide (4) que plusieurs supports de données (9) sont engendrés.

7. Procédé selon une des revendications de 1 à 6, **caractérisé en ce que**, en tant qu'enveloppe à vide (4), un film (S2) tubulaire ouvert à au moins une extrémité est utilisé (S1), qui, après l'insertion (S2) de la au moins une pile (7) de couches de carte, est mis sous vide (S3) et est fermé (S4) de façon étanche à l'air à la au moins une extrémité ouverte.

8. Procédé selon une des revendications de 1 à 7, **caractérisé en ce que**, dans l'enveloppe à vide (4), au moins une pile (7) de couches de carte est insérée (S2), qui comprend une couche de recouvrement supérieure et inférieure ainsi qu'au moins une couche intermédiaire pourvue d'un circuit intégré et/ou d'informations transmises optiquement ou d'autre manière physique appliquées par-dessus ou insérées dedans.

9. Procédé selon une des revendications de 1 à 8, **caractérisé en ce qu'**une enveloppe à vide (4) consistant en un matériau en matière plastique est utilisée (S1), dont la température de ramollissement se situe en dessus d'une température de ramollissement des couches de carte.

10. Procédé selon la revendication 8, **caractérisé en ce que** c'est à une température de laminage se situant en dessous de la température de ramollissement de l'enveloppe à vide (4) et en dessus de la température de ramollissement des couches de carte que la presse de laminage (20) agit (S7-S8) sur les couches de carte enserrées par l'enveloppe à vide (4) mise sous vide.

11. Procédé selon une des revendications de 1 à 10, **caractérisé en ce que** l'enveloppe à vide (4) mise sous vide est agencée dans la presse de laminage (20) entre des coussinets de presse (3) et des tôles de laminage (5) et **en ce que** la au moins une pile (7) de couches de carte est chauffée (S7) jusqu'à une température de laminage prédéterminée, pressée (S8) et refroidie (S9).

12. Procédé selon une des revendications de 1 à 11, **caractérisé en ce que** la au moins une pile (7) de couches de carte est laminée (S7-S9) avec une presse de laminage (20) laminant à pression d'air ambiante.

13. Agencement destiné à la fabrication d'au moins un support de données (9) en forme de carte, comprenant une presse de laminage (20) et une enveloppe à vide (4) disposée (20) dans la presse de laminage et mise à disposition, mise sous vide et enserrant au moins une pile (7) d'au moins deux couches de carte à laminer selon une des revendications de 1 à 9, la presse de laminage (20) étant équipée pour laminer la au moins une pile (7) de couches de carte selon une des revendications de 1 à 12.

14. Agencement selon la revendication 13, comprenant un dispositif de mise sous vide (10) distinct de la presse de laminage (20) et équipé pour mettre sous vide selon une des revendications de 1 à 9 la au moins une pile (7) de couches de carte insérée dans l'enveloppe à vide (4).

15. Utilisation d'une presse de laminage (20) laminant à pression d'air ambiante pour le laminage d'au moins une pile (7) d'au moins deux couches de carte suivant un procédé selon une des revendications de 1 à 12, de telle sorte qu'il n'y a pas d'air occlus entre les couches de carte.
